# EUROPEAN PATENT SPECIFICATION

(11) **EP 0 602 287 B1**
(45) Date of publication and mention of the grant of the patent: **05.03.1997**
(21) Application number: 92204028.2
(22) Date of filing: 18.12.1992
(51) Int. Cl.: B01J 8/12, C10G 45/18

(54) **Reactor for catalytic processes**
Reaktor für katalytische Verfahren
Réacteur destiné aux procédés catalytiques

(43) Date of publication of application: 22.06.1994
(73) Proprietor: SHELL INTERNATIONALE RESEARCH MAATSCHAPPIJ B.V., 2596 HR Den Haag (NL)
(72) Inventor: Den Hartog, Arie Pieter, NL-2596 HR Den Haag (NL); Van Der Els, Augustinus Cornelis Carolus, NL-2596 HR Den Haag (NL); Deelen, Willem Johannes, NL-2596 HR Den Haag (NL); Hölscher, Hugo, NL-1031 CM Amsterdam (NL); Hermans, Godefriedus Antonius Marie, NL-1031 CM Amsterdam (NL)

(56) References cited:
- EP-A- 0 045 108
- EP-A- 0 155 027
- US-A- 4 568 523

## Description

The present invention relates to a reactor for catalytic processes comprising a normally vertical cylindrical vessel provided at its upper end with a catalyst inlet and a reactant inlet and at its lower end with a catalyst outlet and an effluent outlet, the vessel contains a redistribution device.

The reactor is suitably used for catalytically treating hydrocarbons, in particular catalytic desulphurization and demetallization of petroleum residues. In general these processes are carried out at elevated pressures and temperatures.

A reactor for catalytic processes is described in USA patent specification No. 4 568 523. In the know reactor for catalytic processes the redistribution device includes a plurality of interconnected downwardly converging frustoconical surfaces having their lower ends connected to spaced apart vertical outlet channels having circumferential walls provided with circumferential screens allowing effluent to enter into a collection zone, and a distribution tray arranged at the lower end of the collection zone through which the vertical outlet channels extend. The vessel further includes an outlet for secondary fluid opening above the distribution tray.

It is an object of the present invention to provide reactor for catalytic processes with a simpler redistribution device.

To this end the reactor for catalytic processes according to the present invention comprises a normally vertical cylindrical vessel provided at its upper end with a catalyst inlet and a reactant inlet and at its lower end with a catalyst outlet and an effluent outlet, the vessel contains a redistribution device, which redistribution device comprises fluid exchange boxes protruding radially from the wall of the vessel, each fluid exchange box having a top cover, vertical side walls at least one of which being provided with means for preventing catalyst particles from passing and an end wall having at least one lower opening, catalyst passages defined by the side walls of adjacent fluid exchange boxes which catalyst passages are closed at their inner ends, a central chamber defined by the end walls of the fluid exchange boxes provided with a top cover, and a fluid distributor arranged at the lower end of the redistribution device, wherein the fluid distributor comprises a distribution tray in the central chamber and distribution plates in the fluid exchange boxes arranged under the lower openings.

An advantage of the redistribution device in the reactor for catalytic processes of the present invention is that the redistribution device is less affected by thermal stresses. A further advantage is that it can easily be assembled inside the vessel.

Suitable the vessel further includes means for supplying secondary fluid into at least one of the boxes or into the central chamber.

The invention will now be described by way of example in more detail with reference to the accompanying drawings, wherein
Figure 1 shows schematically a side view of the reactor for catalytic processes according to the present invention;
Figure 2 shows schematically part of a longitudinal section of the reactor for catalytic processes of Figure 1 drawn to a different scale;
Figure 3 shows cross-sections of the reactors for catalytic processes of Figure 2, 4 and 5 along the line III-III;
Figure 4 shows schematically part of a longitudinal section of an alternative embodiment of the present invention; and
Figure 5 shows schematically part of a longitudinal section of a further alternative embodiment of the present invention.

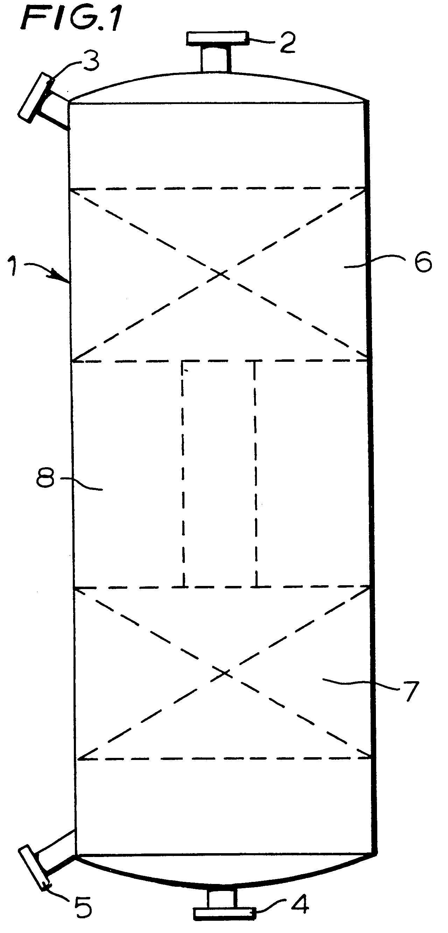

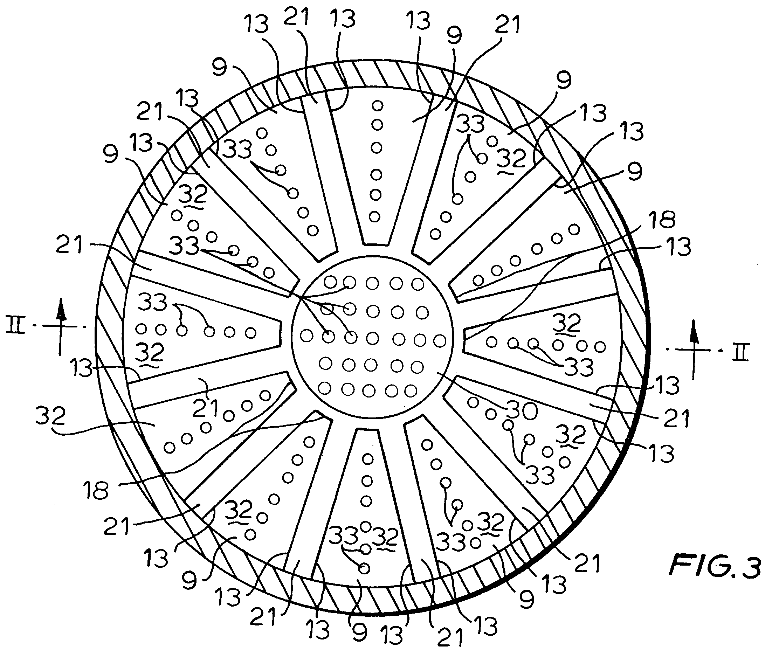

Reference is now made to Figures 1, 2 and 3. The reactor for catalytic processes according to the present invention comprises a normally vertical cylindrical vessel 1. The vessel 1 is provided at its upper end with a catalyst inlet 2 and a reactant inlet 3 and at its lower end with a catalyst outlet 4 and an effluent outlet 5.

The vessel 1 is during normal operation filled with catalyst particles arranged in an upper catalyst bed 6 and a lower catalyst bed 7. The lower catalyst bed is supported by suitable means (not shown).

Between the two catalyst beds 6 and 7 is arranged a redistribution device 8. The redistribution device 8 comprises twelve fluid exchange boxes 9 protruding radially from the wall of the vessel 1.

Each fluid exchange box 9 has a top cover 11, two vertical side walls 13 provided with means for preventing catalyst particles form passing in the form of screen 16 and an end wall 18 having a lower opening 19.

The vertical side walls 13 of adjacent fluid exchange boxes 9 define catalyst passages 21. The end walls 18 of the fluid exchange boxes define a central chamber 25, which central chamber 25 is provided with a top cover 26.

The redistribution device 8 further includes a fluid distributor 28 arranged at the lower end of the redistribution device 8, which fluid distributor 28 comprises a distribution tray 30 arranged in the central chamber 25 and distribution plates 32 arranged in the fluid exchange boxes 9. The distribution tray 30 and the distribution plates 32 are arranged under the lower openings 19. The distribution tray 30 and the distribution plates 32 are provided with openings 33 for the passage of liquid and gas; for the sake of clarity not all openings have been referred to by a reference numeral.

The vessel 1 further includes means for supplying secondary fluid into the fluid exchange boxes 9 in the form of conduits 35.

To prevent, during normal operation, catalyst particles from entering into the central chamber 25, the redistribution device 8 further includes a tube 38 which closes the catalyst passages 21 at their inner ends. The tube 38 is provided with openings 39 near the lower openings 19. The tube 38 and the top cover 26 are removably arranged in the redistribution device 9, and the tube 39 is joined to the top cover 26 to allow removing the tube 38 together with the top cover 39. For the sake of clarity the tolerance between the tube 38 and the end walls 18 of the fluid exchange boxes has been exaggerated in the Figures.

During normal operation the vessel 1 is filled with catalyst particles which are allowed to enter the vessel through catalyst inlet 2. The catalyst particles are arranged in the two catalyst beds 6 and 7 which beds are connected by the catalyst passages 21 which are also filled with catalyst particles. The lower catalyst bed 7 is supported by a suitable catalyst support (not shown) which allows effluent to leave the bed and retains the catalyst particles.

Reactant(s) is (are) supplied to the upper catalyst bed 6 through the reactant inlet 3. In the catalyst bed 6 the reaction starts and product(s) is (are) formed from the reactant(s). The reactant(s) and the formed product(s) move downwardly through the upper catalyst bed 6, via the redistribution device 8 and through the lower catalyst bed 7, where the reaction continues. The effluent leaves the vessel 1 through the effluent outlet 5.

As the mixture of reactant(s) and formed product(s) passes downwards through a catalyst bed the amount of reactant(s) decreases and the amount of product(s) increases, moreover the further the mixture has passed into the catalyst bed the more uneven the distribution of the components in the mixture becomes. Thus the mixture of reactant(s) and formed product(s) in the last part of the upper catalyst bed 6 is not a homogeneous mixture. This uneven distribution of components has a detrimental effect on the operation of the reactor for catalytic processes as for example hot spots may occur. It even more detrimental to pass this inhomogeneous mixture to the lower catalyst bed 7 as the already uneven distribution becomes even more uneven. It is a purpose of the redistribution device 8 to homogenize the fluids from the upper catalyst bed 6 and to pass a homogenized mixture of reactant(s) and formed product(s) to the lower catalyst bed 7. Furthermore in the redistribution device 8 a secondary fluid can be supplied to the mixture.

A major part of the mixture of reactant(s) and formed product(s) flows out of the catalyst passages 21 through the screens 16 into the fluid exchange boxes 9. Secondary fluid is supplied to the fluid exchange boxes through conduits 35, where it mixes with the mixture in the fluid exchange boxes 9. The secondary fluid can be additional reactant or an inert medium, the secondary fluid can be a cold fluid so as to cool the fluids in the reactor for catalytic processes when the reaction is exotherm or it can be a hot fluid to raise the temperature of the mixture when the reaction is endotherm.

Part of the mixture flows through the lower openings 19 and openings 39 into the central chamber 25. The mixture leaves the redistribution device 8 via the fluid distributor 28 comprising the distribution tray 30 arranged in the central chamber 25 and the distribution plates 32 arranged in the fluid exchange boxes 9.

A homogenized mixture is supplied to the lower catalyst bed 7. The effluent from the lower catalyst bed 7 is removed from the vessel 1 through the effluent outlet 5.

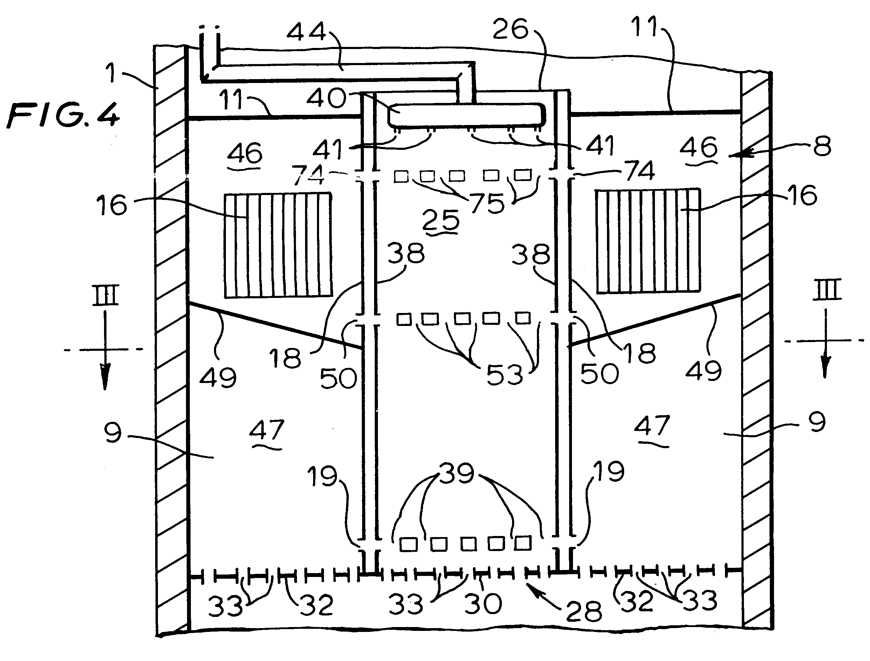

Reference is now made to Figure 4 showing an alternative embodiment of the present invention. Elements that have been discussed with reference to Figures 1-3 have got the same reference numerals and will not be discussed here.

The means for supplying secondary fluid consists of an outlet in the form of fluid distributor 40 provided with several nozzles 41 arranged in the central chamber 25. Fluid is supplied to the fluid distributor 40 via conduit 44.

Each fluid exchange box 9 includes an upper part 46 and a lower part 47 separated by a separation plate 49 arranged above the lower openings 19 and below the screens 16, and wherein the upper part of each fluid exchange box 9 has a fluid outlet 50. To enable fluid communication the tube 38 is provided with openings 53 near the fluid outlets 50.

During normal operation a major part of the mixture of reactant(s) and product(s) passes through the screens 16 into the upper parts 46 of the fluid exchange boxes 9. The mixture passes to the central chamber 25 via the fluid outlets 50 and the openings 53. In the central chamber 25 the mixture is mixed with secondary fluid from the fluid distributor 40.

Part of the mixture flows through the lower openings 39 and lower openings 19 out of the central chamber 25 into the lower parts 47 of the fluid exchange boxes 9. The mixture leaves the redistribution device 8 via the fluid distributor 28 comprising the distribution tray 30 arranged in the central chamber 25 and the distribution plates 32 arranged in the fluid exchange boxes 9.

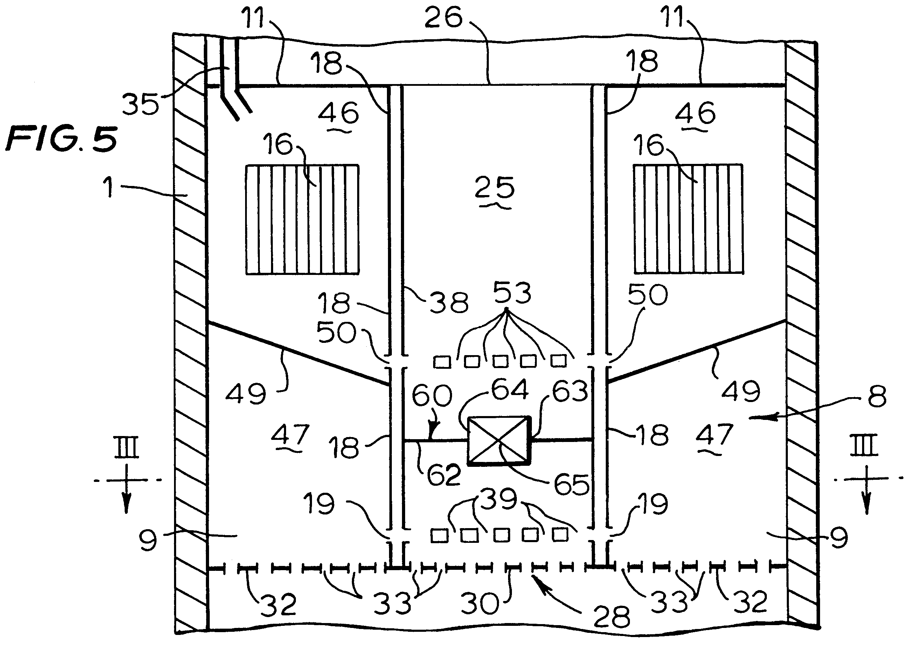

Reference is made to Figure 5 showing a further alternative embodiment of the invention wherein the means for supplying secondary fluid consists of a single conduit 35 debouching in a single fluid exchange box 9. Elements that have been discussed with reference to the previous Figures have got the same reference numerals and will not be discussed here.

During normal operation a major part of the mixture of reactant(s) and product(s) passes through the screens 16 into the upper parts 46 of the fluid exchange boxes 9. In one of the fluid exchange boxes 9 the mixture is mixed with secondary fluid supplied through conduit 35. Fluid leaves the fluid exchange boxes through fluid outlets 50 and flows through openings 53 into the central chamber 25.

The fluid is mixed in the central chamber 25. Part of the mixture flows through the lower openings 39 and lower openings 19 out of the central chamber 25 into the lower parts 47 of the fluid exchange boxes 9. The mixture leaves the redistribution device 8 via the fluid distributor 28 comprising the distribution tray 30 arranged in the central chamber 25 and the distribution plates 32 arranged in the fluid exchange boxes 9.

To improve mixing of the secondary fluid supplied to one fluid exchange box 9 with the mixture entering into all fluid exchange boxes 9, the central chamber 25 is provided with a mixing device 60. The fluid outlets 50 of the upper parts 46 of the fluid exchange boxes 9 open via openings 53 on the mixing device 60.

The mixing device 60 comprises a tray 62 with a central opening 63 and a tube 64 provided with structured packing 65 arranged in the central opening 63. Mixing takes place in the tube 64.

During normal operation the fluid is mixed in the tube 64 of the mixing device 60, which tube 64 is provided with structured packing 65.

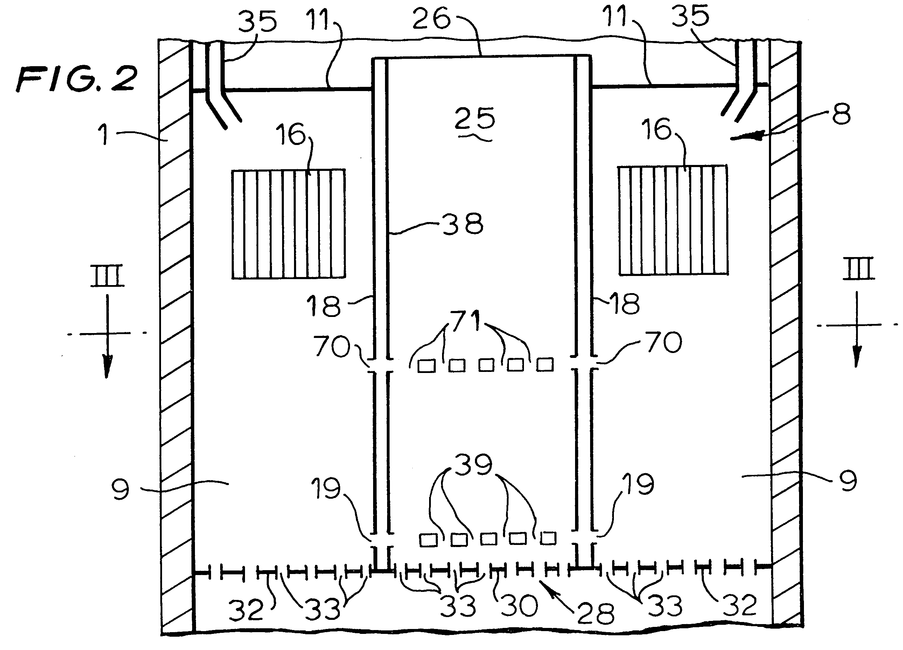

The mixing device in the central passage 25 can be applied with the same effect in the embodiment as shown in Figure 4 wherein the secondary fluid is supplied via fluid distributor 40 into the central chamber 25. In addition, the mixing device in the central passage 25 together with the fluid exchange boxes divided in an upper part and in a lower part can be applied with the same effect in the embodiment as shown in Figure 2 wherein the secondary fluid is supplied to all fluid exchange boxes 9.

So far the reactor for catalytic processes has been described as a reactor for catalytic processes in which the catalysts beds are static. In this embodiment the top covers 11 of the fluid exchange boxes 9 and the top cover 26 of the central passage 25 are flat. The reactor for catalytic processes, however, can also be operated as a moving catalyst bed reactor wherein during normal operation an amount of spent catalyst is removed from the lower catalyst bed 7 through catalyst outlet 4 and an equal amount of fresh catalyst is supplied to the upper catalyst bed 6 through catalyst inlet 2. When catalyst is removed from the lower catalyst bed 7, catalyst in the catalyst passages 21 between adjacent fluid exchange boxes 9 moves downwards to fill-up the upper part of the lower catalyst bed 7, and catalyst from the upper catalyst bed 6 enters into the catalyst passages 21. To facilitate catalyst entering into the catalyst passages 21 the top cover 26 of the central chamber 25 has a conical shape, and the top covers 11 of the fluid exchange boxes 9 consists of two inclined walls joined by a seam. Suitably the catalyst passages 21 have a constant width.

The operation of the reactor for catalytic processes as a moving catalyst bed reactor only differs from the operation of the reactor for catalytic processes as described with reference to the Figures in that the catalyst is intermittently or constantly refreshed, wherein used or spent catalyst is withdrawn through catalyst outlet 4 and fresh catalyst is supplied through catalyst inlet 2.

The fluid exchange boxes 9 can be secured to the wall of the vessel 1, alternatively the fluid exchange boxes have back walls and are suspended from the wall.

The number of fluid exchange boxes is suitably an even number between 10 and 20.

In the openings 33 in the distribution tray 30 and in the distribution plates 32 small pipes can be arranged which extend to above the distribution tray and the distribution plates to improve the dispersion of liquid flowing downwards through the fluid distributor 28, the pipes extend to above the lower openings 39 to provide a sufficient hold-up.

The fluid can be a liquid or it can be a mixture of liquid and gas. In case the fluid is a mixture of liquid and gas flow of gas has to be ensured. To allow flow of gas between the central chamber 25 and the fluid exchange boxes 9, the fluid exchange boxes 9 are provided with secondary lower openings 70 and the tube 38 is provided with corresponding openings 71 (see Figure 2). It will be understood that the secondary lower openings can be applied with the same effect in the embodiments of Figures 4 and 5. It will furthermore be evident that in case a mixing device is arranged in the central chamber, such mixing device is arranged above the secondary lower openings, and that in case the fluid exchange box includes an upper part and a lower part separated by a separation plate, the separation plates are located above the secondary openings.

Reference is made to Figure 4. If the level of liquid on the separation plate 49 is above the fluid outlets 50, gas flow through the fluid outlets 50 is hindered. To allow gas flow into the central chamber 25, the upper parts 46 of the fluid exchange boxes 9 are provided with secondary fluid outlets 74 and the tube 38 is provided with corresponding openings 75. It will be understood that the secondary fluid outlets can be applied with the same effect in the embodiment of Figure 5.

If it is not required to add secondary fluid, the vessel will generally not be provided with the conduits 35 or with the fluid distributor 40.

If the reactor for catalytic processes according to the present invention is used for a moving catalyst bed, the reactor can suitably be provided with a separation device as described in co-pending European patent specification publication No. 0,602,288, which has been filed on the same date.

## Claims

1. A reactor for catalytic processes comprising a vertical cylindrical vessel (1) provided at its upper end with a catalyst inlet (2) and a reactant inlet (3) and at its lower end with a catalyst outlet (4) and an effluent outlet (5), which vessel (1) contains a redistribution device (8) comprising fluid exchange boxes (9) protruding radially from the wall of the vessel (1), each fluid exchange box (9) having a top cover (11), vertical side walls (13) at least one of which being provided with a means (16) for preventing catalyst particles from passing while gas and/or liquid are allowed to pass, and an end wall (18) having at least one lower opening (19), catalyst passages (21) defined by the side walls (13) of adjacent fluid exchange boxes (9) which catalyst passages (21) are closed at their inner ends, a central chamber (25) defined by the end walls (18) of the fluid exchange boxes (9) provided with a top cover (26), and a fluid distributor (28) arranged at the lower end of the redistribution device (8), wherein the fluid distributor (28) comprises a distribution tray (30) in the central chamber (25) and distribution plates (32) in the fluid exchange boxes (9) arranged under the lower openings (19).

2. Reactor for catalytic processes according to claim 1, wherein the vessel (1) further includes means for supplying secondary fluid into at least one of the boxes (9) or into the central chamber (25).

3. Reactor for catalytic processes according to claim 2, wherein the means for supplying secondary fluid consists of a supply conduit (44) provided with an outlet (40, 41) arranged in the central chamber (25), wherein the fluid exchange boxes (9) include an upper part (46) and a lower part (47) separated by a separation plate (49) arranged above the lower opening(s) (19), and wherein the upper part (46) has at least one fluid outlet (50).

4. Reactor for catalytic processes according to claim 3, wherein the central chamber (25) is provided with a mixing device (60) arranged between the fluid outlets (50) and the lower openings (19).

5. Reactor for catalytic processes according to claim 2, wherein the means for supplying secondary fluid consists of supply conduit(s) (35) debouching into the upper part(s) of one or more fluid exchange box(es) (9), wherein the fluid exchange boxes (9) include a lower part (47) separated from the upper part (46) by a separation plate (49) arranged above the lower opening(s) (19), and wherein the upper part (46) has at least one fluid outlet (50).

6. Reactor for catalytic processes according to claim 5, wherein the central chamber (25) is provided with a mixing device (60) arranged between the fluid outlets (50) and the lower openings (19).

7. Reactor for catalytic processes according to claim 2, wherein the means for supplying secondary fluid consists of supply conduits (35) debouching into the upper parts of all fluid exchange boxes (9).

8. Reactor for catalytic processes according to claim 7, wherein each fluid exchange box (9) includes a lower part (47) separated from the upper part (46) by a separation plate (49) arranged above the lower opening(s) (19), wherein the upper part (46) has at least one fluid outlet (50), and wherein the central chamber (25) is provided with a mixing device (60) arranged between the fluid outlets (50) and the lower openings (19).

9. Reactor for catalytic processes according to anyone of the claims 4, 6 and 8, wherein the mixing device (60) comprises a tray (62) with a central opening (63) and a tube (64) provided with structured packing (65) arranged in the central opening (63).

10. Reactor for catalytic processes according to anyone of the claims 1-9, wherein the top cover (26) of the central chamber (25) has a conical shape.

11. Reactor for catalytic processes according to anyone of the claims 1-10, wherein the top cover (11) of a fluid exchange box (9) consists of two inclined walls.

## Patentansprüche

1. Reaktor für katalytische Verfahren, enthaltend einen vertikalen zylindrischen Behälter (1), der an seinem Kopf mit einem Katalysatoreinlaß (2) und einem Reaktandeneinlaß (3) und an seinem Boden mit einem Katalysatorauslaß (4) und einem Austragsstromauslaß (5) versehen ist, wobei der Behälter (1) eine Wiederverteilungseinrichtung (8), enthaltend radial aus der Wand des Behälters (1) herausragende Fluidaustauschboxen (9), wobei jede Fluidaustauschbox (9) einen Deckel (11), vertikale Seitenwände (13), von denen mindestens eine mit einem Mittel (16) zur Verhinderung des Durchgangs von Katalysatorteilchen, wohingegen Gas und/oder Flüssigkeit passieren können, versehen ist, und eine Stirnwand (18) mit mindestens einer unteren Öffnung (19) besitzt, durch die Seitenwände (13) benachbarter Fluidaustauschboxen (9) ausgebildete Katalysatordurchgänge (21), die an ihren inneren Enden geschlossen sind, eine durch die Stirnwände (18) der Fluidaustauschboxen (9) ausgebildete zentrale Kammer (25), die mit einem Deckel (26) versehen ist, und einen Fluidverteiler (28), der am Boden der Wiederverteilungseinrichtung (8) angeordnet ist, wobei der Fluidverteiler (28) ein Verteilerblech (30) in der zentralen Kammer (25) und unter den unteren Öffnungen (19) angeordnete Verteilerplatten (32) in den Fluidaustauschboxen (9) enthält, enthält.

2. Reaktor für katalytische Verfahren nach Anspruch 1, wobei der Behälter (1) weiter ein Mittel zur Zufuhr von Sekundärfluid in mindestens eine der Boxen (9) oder in die zentrale Kammer (25) enthält.

3. Reaktor für katalytische Verfahren nach Anspruch 2, wobei das Mittel zur Zufuhr von Sekundärfluid aus einer Zuleitung (44) mit einem in der zentralen Kammer (25) angeordneten Auslaß (40, 41) besteht, wobei die Fluidaustauschboxen (9) einen oberen Teil (46) und einen unteren Teil (47), die durch eine über der unteren Öffnung (19) bzw. den unteren Öffnungen (19) angeordnete Trennplatte (49) voneinander getrennt sind, enthalten und wobei der obere Teil (46) mindestens einen Fluidauslaß (50) aufweist.

4. Reaktor für katalytische Verfahren nach Anspruch 3, wobei die zentrale Kammer (25) mit einem zwischen den Fluidauslässen (50) und den unteren Öffnungen (19) angeordneten Mischer (60) versehen ist.

5. Reaktor für katalytische Verfahren nach Anspruch 2, wobei das Mittel zur Zufuhr von Sekundärfluid aus Zuleitung(en) (35), die in den oberen Teil bzw. die oberen Teile einer oder mehrerer Fluidaustauschboxen (9) einmündet bzw. einmünden, wobei die Fluidaustauschboxen (9) einen unteren Teil (47), der vom oberen Teil (46) durch eine über der unteren Öffnung (19) bzw. den unteren Öffnungen (19) angeordnete Trennplatte (49) getrennt ist, enthalten und wobei der obere Teil (46) mindestens einen Fluidauslaß (50) aufweist.

6. Reaktor für katalytische Verfahren nach Anspruch 5, wobei die zentrale Kammer (25) mit einem zwischen den Fluidauslässen (50) und den unteren Öffnungen (19) angeordneten Mischer (60) versehen ist.

7. Reaktor für katalytische Verfahren nach Anspruch 2, wobei das Mittel zur Zufuhr von Sekundärfluid aus Zuleitungen (35) besteht, die in die oberen Teile aller Fluidaustauschboxen (9) einmünden.

8. Reaktor für katalytische Verfahren nach Anspruch 7, wobei jede Fluidaustauschbox (9) einen unteren Teil (47), der vom oberen Teil (46) durch eine über der unteren Öffnung (19) bzw. den unteren Öffnungen (19) angeordnete Trennplatte (49) getrennt ist, enthält, wobei der obere Teil (46) mindestens einen Fluidauslaß (50) aufweist und wobei die zentrale Kammer (25) mit einem zwischen den Fluidauslässen (50) und den unteren Öffnungen (19) angeordneten Mischer (60) versehen ist.

9. Reaktor für katalytische Verfahren nach einem der Ansprüche 4, 6 und 8, wobei der Mischer (60) ein Blech (62) mit einer zentralen Öffnung (63) und einem in der zentralen Öffnung (63) angeordneten Rohr (64), das mit einer geordneten Packung (65) versehen ist, enthält.

10. Reaktor für Katalytische Verfahren nach einem der Ansprüche 1-9, wobei der Deckel (26) der zentralen Kammer (25) kegelförmig ist.

11. Reaktor für katalytische Verfahren nach einem der Ansprüche 1-10, wobei der Deckel (11) einer Fluidaustauschbox (9) aus zwei schrägstehenden Wänden besteht.

## Revendications

1. Réacteur pour procédés catalytiques comprenant un réservoir cylindrique vertical (1) pourvu, à son extrémité supérieure, d'une entrée (2) pour le catalyseur et d'une entrée (3) pour le réactif et, à son extrémité inférieure, d'une sortie (4) pour le catalyseur et d'une sortie (5) pour les effluents, lequel réservoir (1) contient un dispositif de redistribution (8) comprenant des boîtes d'échange fluidique (9) faisant saillie radialement depuis la paroi du réservoir (1), chaque boîte d'échange fluidique (9) ayant un couvercle supérieur (11), des parois latérales verticales (13) dont au moins une est pourvue d'un moyen (16) pour empêcher les particules de catalyseur de passer tout en laissant passer du gaz et/ou du liquide et une paroi d'extrémité (18) ayant au moins un orifice inférieur (19), des passages (21) pour le catalyseur définis par les parois latérales (13) de boîtes d'échange fluidiques adjacentes (9), lesquels passages (21) pour le catalyseur étant fermés à leurs extrémités internes, une chambre centrale (25) définie par les parois d'extrémité (18) des boîtes d'échange fluidique (9) pourvue d'un couvercle supérieur (26), et un distributeur de fluide (28) arrangé à l'extrémité inférieure du dispositif de redistribution (8), dans lequel le distributeur de fluide (28) comprend un bac de distribution (30) dans la chambre centrale (25) et des plateaux de distribution (32) dans les boîtes d'échange fluidique (9) arrangés sous les orifices inférieurs (19).

2. Réacteur pour procédés catalytiques selon la revendication 1, dans lequel le réservoir (1) comporte en outre un moyen pour fournir du fluide secondaire dans au moins une des boîtes (9) ou dans la chambre centrale (25).

3. Réacteur pour procédés catalytiques selon la revendication 2, dans lequel le moyen pour fournir du fluide secondaire est constitué d'une conduite d'alimentation (44) pourvue d'une sortie (40, 41) arrangée dans la chambre centrale (25), dans lequel les boîtes d'échange fluidique (9) comportent une partie supérieure (46) et une partie inférieure (47) séparées par une plaque de séparation (49) arrangée au-dessus de l'orifice (des orifices) inférieur(s) (19), et dans lequel la partie supérieure (46) a au moins une sortie (50) pour le fluide.

4. Réacteur pour procédés catalytiques selon la revendication 3, dans lequel la chambre centrale (25) est pourvue d'un dispositif mélangeur (60) arrangé entre les sorties (50) pour le fluide et les orifices inférieurs (19).

5. Réacteur pour procédés catalytiques selon la revendication 2, dans lequel le moyen pour fournir du fluide secondaire est constitué d'une (de) conduite(s) d'alimentation (35) débouchant dans la (les) partie(s) supérieure(s) d'une ou plusieurs boîte(s) d'échange fluidique (9), dans lequel les boîtes d'échange fluidique (9) comportent une partie inférieure (47) séparée de la partie supérieure (46) par une plaque de séparation (49) arrangée au-dessus de l'orifice (des orifices) inférieur(s) (19), et dans lequel la partie supérieure (46) a au moins une sortie (50) pour le fluide.

6. Réacteur pour procédés catalytiques selon la revendication 5, dans lequel la chambre centrale (25) est pourvue d'un dispositif mélangeur (60) arrangé entre les sorties (50) pour le fluide et les orifices inférieurs (19).

7. Réacteur pour procédés catalytiques selon la revendication 2, dans lequel le moyen pour fournir du fluide secondaire est constitué de conduites d'alimentation (35) débouchant dans les parties supérieures de toutes les boîtes d'échange fluidique (9).

8. Réacteur pour procédés catalytiques selon la revendication 7, dans lequel chaque boîte d'échange fluidique (9) comporte une partie inférieure (47) séparée de la partie supérieure (46) par un plaque de séparation (49) arrangé au-dessus de l'orifice (des orifices) inférieur(s) (19), dans lequel la partie supérieure (46) a au moins une sortie (50) pour le fluide, et dans lequel la chambre centrale (25) est pourvue d'un dispositif mélangeur (60) arrangé entre les sorties (50) pour le fluide et les orifices inférieurs (19).

9. Réacteur pour procédés catalytiques selon l'une quelconque des revendications 4, 6 et 8, dans lequel le dispositif mélangeur (60) comprend un bac (62) avec un orifice central (63) et un tube (64) pourvu d'une garniture structurée (65) arrangé dans l'orifice central (63).

10. Réacteur pour procédés catalytiques selon l'une quelconque des revendications 1-9, dans lequel le couvercle supérieur (26) de la chambre centrale (25) a une forme conique.

11. Réacteur pour procédés catalytiques selon l'une quelconque des revendications 1-10, dans lequel le couvercle supérieur (11) d'une boîte d'échange fluidique (9) est constitué de deux parois inclinées.
